# EUROPEAN PATENT APPLICATION

(11) **EP 3 261 063 A1**
(43) Date of publication of application: **27.12.2017**
(21) Application number: 16180390.3
(22) Date of filing: 20.07.2016
(51) Int. Cl.: G07C 9/00, G07F 7/10

(54) **DIGITAL DOOR LOCK HAVING DETACHABLE FUNCTION EXTENSION MODULE**

(30) Priority: 22.06.2016 KR 20160077992
(71) Applicant: ASSA ABLOY Korea, Seoul 08503 (KR)
(72) Inventor: SONG, Tae Heung, 14295 Gyeonggi-do (KR)
(74) Representative: Jacobacci Coralis Harle

(57) **Abstract**

Disclosed is a digital door lock having a detachable function extension module. An inputting unit receives a user information including at least one of a common information used in common by a plurality of users and a personalized information inherent to each user. A locking function unit converts a door to a locked state or an unlocked state. A control unit serves to compare again the inputted user information to an authentication information when the inputted user information is inconsistent with the authentication information and to block the operation of the inputting unit and then convert the inputting unit to a forced block mode if the number of inconsistency reaches a decision number. In particular, the digital door lock may have a function extension module mounted therein which implements a function of calculating the degree of similarity by comparing the inputted user information to the authentication information and a function of reducing a block time period in which the forced block mode is maintained if the degree of similarity is greater or equal to a predetermined value when the door or the inputting unit is converted to the forced block mode.

## Description

### TECHNICAL FIELD

The present invention relates to a digital door lock and particularly to a digital door lock having a detachable function extension module.

### TECHNICAL BACKGROUND

Recently, in light of vulnerability of the conventional mechanical door locks, various products have been used such as door locks configured to lock and unlock a door with an electronic key including a magnetic card-type electronic key or an IC card-type electronic key and door locks configured to lock and unlock a door by manually inputting a personal identification number. Even biometric door locks have been put to practical use that are configured to utilize characteristics of specific parts of human body such as voices, finger prints, face features, iris patterns and blood vessel patterns.

As mentioned above, such a door lock may comprise a wired and wireless communication means for receiving information from an electronic key when the electronic key comes into contact with a door lock or approaches it in a non-contact manner; and an inputting means which includes a keypad configured to input directly a personal identification number by a user, a mike for inputting voices, a scanner for scanning finger prints and a camera for shooting face or iris.

In addition, generally, for the purpose of blocking an illegal invader from unlawfully operating a door lock, the door lock is operated in a forced block mode if it is detected that inaccurate information is inputted repetitively. When a forced block mode is activated, all operations of a door lock are blocked for a predetermined time period or the operation of an inputting unit of the door lock is blocked.

Normal door locks are configured to be operated in a forced block mode for three minutes when a personal identification number is erroneously inputted five times or an inaccurate electronic key comes in contact with a door lock five times.

However, even legal users may input erroneously a personal identification number or get an electronic key to come into an inaccurate contact with a door lock. Furthermore, finger prints or face features of users may be shot incompletely, thus leading to the failure of authentication. However, in these cases, if legal users have to wait for three minutes it will cause a great inconvenience to them.

To solve the foregoing problems, one object of the present invention is to provide the function of being capable of reducing a time period in which a forced block mode is maintained when a door lock is converted to the forced block mode due to a legal user's error.

Another object of the present invention is to add a further function related with the forced block mode to a conventional door lock in a simple manner.

### SUMMARY OF THE INVENTION

According to an embodiment, a digital door lock having a detachable function extension module of the invention comprises: an inputting unit configured to receive a user information comprising at least one of a common information which can be used in common by a plurality of users and a personalized information which is inherent to each user; a locking function unit configured to convert a door to a locked state or an unlocked state; and a control unit configured to convert the door to an unlocked state by controlling the locking function unit when the user information inputted by the inputting unit and a pre-registered authentication information are consistent with each other by comparing the inputted user information to the authentication information; and, when the inputted user information is inconsistent with the authentication information, to compare again the re-inputted user information to the authentication information and then to convert the door to a forced block mode which blocks an inputting operation of the inputting unit when the number of inconsistency reaches a decision number; wherein the digital door lock further comprises the function extension module mounted thereto; and a module mounting unit which supports data communication between the mounted function extension module and the control unit; the function extension module comprises a program configured to implement a function of calculating the degree of similarity by comparing the inputted user information to the authentication information and a function of reducing a block time period in which the forced block mode is maintained if the degree of similarity of the re-inputted user information is greater than or equal to a predetermined standard value at the time of converting the door to the forced block mode; and the control unit is configured to perform said functions by receiving the program from the function extension module mounted in the module mounting unit.

According to further embodiment, the common information is a personal identification number comprising a plurality of numbers or letters manually inputtable by a user via a keypad; and the personalized information comprises an information obtained from at least one of fingerprints, a face, irises, and blood vessel patterns of the user or an information, inherently assigned to each user, stored in a contact or non-contact type of data transmitting means.

According to further embodiment, the program is configured to reduce the block time period when the number of the user information having the degree of similarity of greater than or equal to the predetermined value is greater than or equal to a predetermined number.

According to further embodiment, the program is configured to reduce the block time period in which the forced block mode is maintained, in case the personalized information inputted by a user is consistent with the personalized information of an authorized user and the number of inconsistency reaches the decision number and thus the operation of the inputting unit is converted to the forced block mode.

According to further embodiment, the program is configured to calculate the degree of similarity by comparing the personalized information inputted by the user to the personalized information of the authorized user and to reduce the block time period in which the inputting unit is maintained in the forced block mode if the degree of similarity calculated is greater than or equal to the predetermined value.

According to further embodiment, the program is configured to forcedly block the inputting of the common information and to allow the inputting of the personalized information in case the number of inconsistency of the common information reaches the decision number.

According to further embodiment, the control unit is configured not to execute the program if the function extension module is removed from the module mounting unit.

According to another embodiment, a digital door lock having a detachable function extension module comprises: an inputting unit configured to receive a user information comprising at least one of a common information which can be used in common by a plurality of users and a personalized information which is inherent to each user; a locking function unit configured to convert a door lock to a locked state or an unlocked state; and a control unit configured to convert the door to the unlocked state by controlling the locking function unit when the user information inputted by the inputting unit and a pre-registered authentication information are consistent with each other by comparing the inputted user information to the authentication information; and, when the inputted user information is inconsistent with the authentication information, to compare again the re-inputted user information to the authentication information and then to convert the door to a forced block mode which blocks an inputting operation of the inputting unit when the number of inconsistency reaches a decision number; wherein the digital door lock further comprises a function extension module mounted thereto; a module mounting unit which supports data communication between the mounted function extension module and the control unit; the function extension module comprises a program configured to implement a function of forcedly blocking the inputting of the common information and allowing the inputting of the personalized information in case the common information is inputted among the user information and the number of inconsistency of the common information reaches the decision number and thus the inputting unit is converted to the forced block mode; and the control unit is configured to perform said function by receiving the program from the function extension module mounted in the module mounting unit.

According to yet another embodiment, a digital door lock having a detachable function extension module comprises: an inputting unit configured to receive a user information comprising at least one of a common information which can be used in common by a plurality of users and a personalized information which is inherent to each user; a locking function unit configured to convert a door to a locked state or an unlocked state; and a control unit configured to convert the door to the unlocked state by controlling the locking function unit when the user information inputted by the inputting unit and a pre-registered authentication information are consistent with each other by comparing the inputted user information to the authentication information; and, when the inputted user information is inconsistent with the authentication information, to compare again the re-inputted user information to the authentication information and then to convert the door to a forced block mode which blocks an inputting operation of the inputting unit when the number of inconsistency reaches a decision number; wherein the digital door lock further comprises a function extension module mounted thereto; and a module mounting unit which supports data communication between the mounted function extension module and the control unit; the function extension module comprises a program configured to implement a function of differentiating a block time period in which the forced block mode is maintained by converting the inputting unit to the forced block mode since the number of inconsistency between the common information among the inputted user information and the authentication information reaches the decision number and a block time period in which the forced block mode is maintained by converting the inputting unit to the forced block mode according to the number of inconsistency of the personalized information; and the control unit is configured to perform said function by receiving the program from the function extension module mounted in the module mounting unit.

According to a digital door lock having a detachable function extension module according to the present invention with the foregoing features, it may be discerned if a door lock is converted to a forced block mode because a legal user is not accurately authenticated, even if he is a legal user, due to his manipulation error or environment conditions, thus reducing a time period in which the forced block mode is maintained. Accordingly, the inconvenience to a legal user may decrease.

In addition, said function may be added only by mounting the function extension module on the digital door lock.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a block diagram of a configuration of a door lock having a detachable function extension module according to the present invention.
FIG. 2 is a flow chart for describing an operation of performing a forced block function in a conventional door lock.
FIG. 3 is a flow chart for describing an operation in case a function extension module is mounted according to one embodiment of the present invention.
FIG. 4 is a flow chart for describing an operation in which a forced block mode is differentially applied.

### DETAILED DESCRIPTION OF EXEMPLARY EMBODIMENTS

All technical terms, unless otherwise defined, have the following definitions and coincide with the meanings which a person skilled in the relevant field of the present invention generally understands. Further although preferable methods are described in the specification, the similar matters or equivalents thereof are included in the scope of the present invention.

Now, a digital door lock having a detachable function extension module according to a preferable embodiment of the present invention will be described with reference to drawings. For reference, in describing the present invention below, the terms which refer to the constituting elements of the present invention have been designated in light of the functions of the respective constituting elements and thus these terms should not be construed as limiting the technical constituting elements of the present invention.

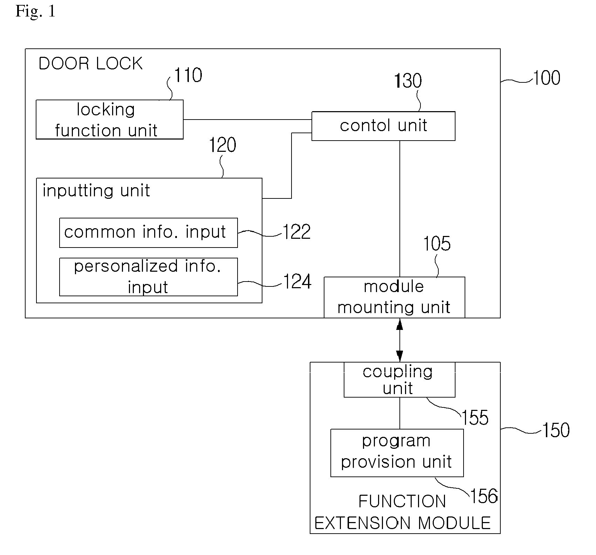

First, with reference to the block diagram of Fig. 1, the configuration of a door lock having a detachable function extension module according to the present invention will be described.

The door lock 100 may comprise an inputting unit120 configured such that a user may input a user information assigned to the user; a locking function unit 110 for converting a door to a locked or unlocked state; and a control unit 130 configured to convert a door to an unlocked state by controlling the locking function unit 110 when an inputted user information and a pre-registered authentication information are consistent with each other by comparing both information and to maintain a door in a locked state when an inputted user information and a pre-registered authentication information are inconsistent with each other.

In particular, the control unit 130 may be configured such that a user information is re-inputted from a user when an inputted user information and a pre-registered authentication information are inconsistent with each other, and then the re-inputted user information and the pre-registered authentication information are again compared. At this time, the control unit 130 may count the number of being determined as inconsistent. And, when the counted number reaches a predetermined number, a user currently inputting a user information may be determined as an illegal user and the door lock 100 or at least the inputting unit 120 may be converted to a forced block mode.

Further, the control unit 130 may be configured to download and execute a program stored in a function extension module 150 and control any unit of the door lock 100 based on an executed program.

A forced block mode is an operation mode which blocks all functions of the door lock or at least an operation of the inputting unit for a predetermined block time period. For example, if an illegal manipulation is detected five times, the door lock may be converted to the forced block mode and thus the forced block mode may be maintained for three minutes.

The inputting unit120 may comprise a common information inputting unit 122 for receiving the common information which is a user information which a plurality of users may use in common; and a personalized information inputting unit 124 which may receive a personalized information which is a user information inherently assigned for each user.

The common information may be, for example, a personal identification number composed of a combination of letters and numbers. The common information inputting unit 122 may include a keypad by which letters and numbers may be inputted.

The personalized information may be, for example, voices, finger prints, iris patterns, face features, blood vessel patterns and the like. The personalized information inputting unit 124 may include a mike, a scanner, a camera and the like.

Further, the personal information may be an inherent digital information stored in a digital information storage means such as an i-button, a magnetic card, an IC card, a Bluetooth chip, and an NFC chip. The personal information inputting unit 124 may include a communication means which may communicate with the digital information storage means in a contact manner or in a non-contact manner.

A module mounting unit 105 which is a component for mounting a function extension module 150 may include a communication interface which may be in contact with a coupling unit 155 of the function extension module to communicate data.

The function extension module 150 may be coupled to and fixed to the module mounting unit 105 of the door lock. The function extension module 150 may include the coupling unit 155 which is coupled to and communicates wired and wirelessly with the communication interface of the module mounting unit 105; and a program provision unit 156 for storing a program to be provided to the control unit 130 of the door lock.

The module mounting unit 105 and the coupling unit 155 may also support a wireless communication utilizing an electromagnetic wave, as well as a contact-type wired communication utilizing an electrical contact terminal.

The program provision unit 156 may store a program implementing an extension function designed to be capable of being added to a default function which is already installed in the control unit 130. And, if the coupling unit 155 of the function extension module is coupled to the module mounting unit 105 of the door lock, the program provision unit 156 may transmit said stored program to the control unit 130.

In one embodiment, the function extension module 150 may be a simple data storage means. If the function extension module 150 is mounted to the control unit 130 of the door lock, the control unit 130 may be configured to read in and execute the data stored in the function extension module 150 (i.e., a program implementing an extension function).

In a digital door lock according to the present invention, a program stored in the function extension module is one for implementing an additional function for controlling the forced block mode.

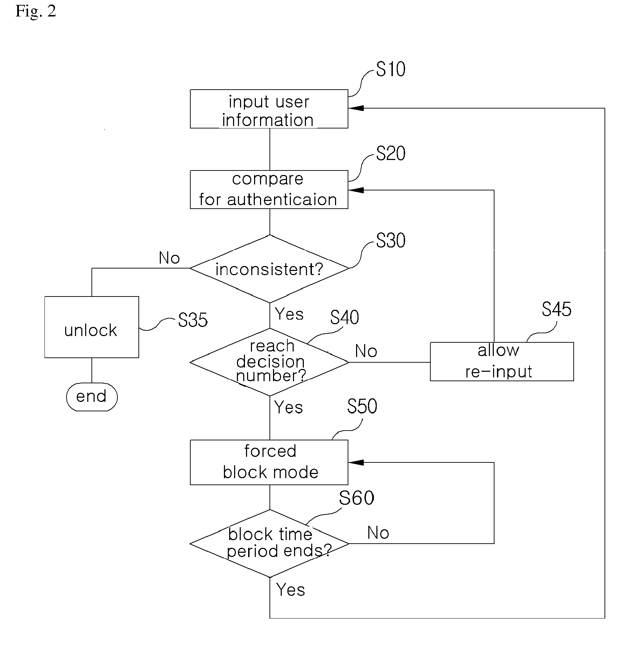

Fig. 2 is a flow chart for describing an operation of a forced block mode which is provided by a conventional door lock. A user may input a user information such as a personal identification number, an inherent digital information or a fingerprint information by using a keypad, an electronic key or a finger and the like, in order to release the locked state of the door lock 100 (S10). The door lock 100 may perform an authentication process by comparing the inputted user information with the stored authentication information on a registered user (S20). As a result of comparison, if the user information and the authentication information are consistent with each other, the door lock 100 will be converted from a locked state to an unlocked state (S35).

If the user information and the authentication information are inconsistent with each other (S30), the number of being determined as inconsistent will be counted up and it is determined whether said number of inconsistency reaches a predetermined decision number (S40). If the number of inconsistency is less than the decision number, the operation of the inputting unit 120 still may be allowed such that the user information may again be inputted (S45) and an authentication process for comparing the inputted user information to the authentication information may be repeated.

Further, during repeating the authentication process for comparing again the user information re-inputted after re-inputting allowance to the authentication information, if the number of being determined as inconsistent reaches the decision number, a user which is currently trying for authentication is determined to be an illegal user and all or some components of the door lock 100 (at least including the inputting unit) are converted to the forced block mode (S50).

The forced block mode may be maintained for a predetermined block time period. And the blocked components are reactivated after being maintained for the block time period, thus allowing again the inputting of the user information (S60).

In a further embodiment, when the inputting unit 120 is reactivated after having experienced the forced block mode, said authentication process may also be carried out by reducing the decision number for converting to the forced block mode.

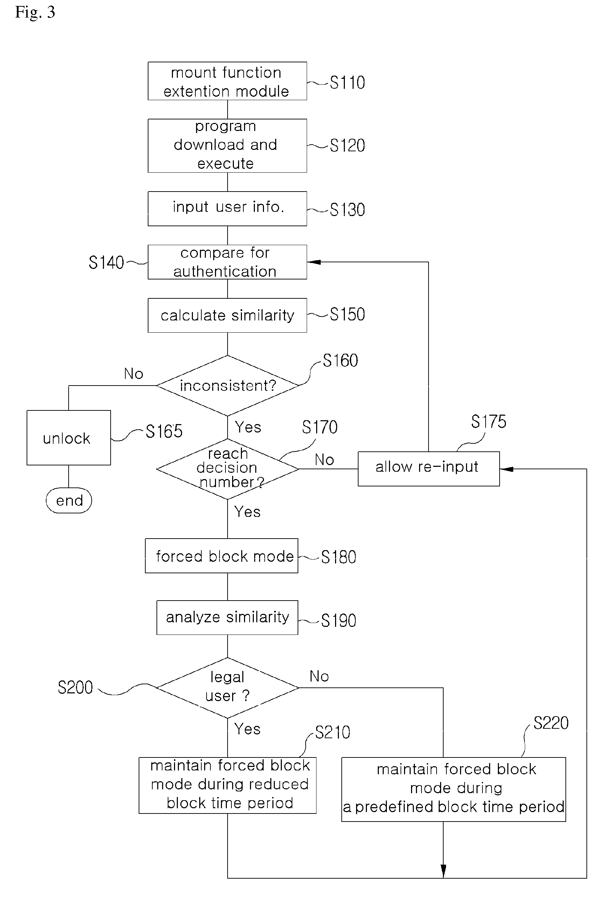

Next, with reference to Fig. 3, an operation when a function extension module is mounted according to one embodiment of the present invention will be described. If the function extension module 150 is coupled to a general door lock 100 which operates as described with Fig. 2, the extension function as in Fig. 3 may be executed.

First, if the function extension module 150 is coupled to the module mounting unit 105 of the door lock 100 (S110), the control unit 130 communicates with the program provision unit 156 of the function extension module 150 and downloads a program stored in the program provision unit 156 (S120). The downloaded program is executed by the control unit 130 to activate an extension function.

This program is designed to implement a function of calculating a degree of similarity by comparing an inputted user information to an authentication information when the user information is inputted, a function of storing the calculated degree of similarity in any storage means; and a function of reducing, depending on conditions, a block time period in which the forced block mode is maintained.

During the execution of said program, if a user inputs a user information by manipulating the inputting unit 120 (S130), the control unit 130 compares the inputted user information to the stored authentication information (S140). The comparison may include a process of calculating the degree of similarity (S150).

A conventional door lock may comprise only a function of comparing whether an inputted user information is "equal" to an authentication information. However, an extension function which is implemented by a program downloaded from the function extension module 150, allows the degree of similarity between the user information and the authentication information to be calculated.

The degree of similarity may be calculated by evaluating the identity of a binary information constituting the user information and a binary information constituting the authentication information, and evaluating a deviation between them if there is a difference therebetween.

According to a simple example, in case each information is composed of 10 letters, if all letters are the same to each other, the degree of similarity may be 100%; if 9 letters are the same to each other, the degree of similarity may be 90%; and if 5 letters are the same to each other, the degree of similarity may be 50%.

In other ways, the degree of similarity may also be calculated by the more complicated calculation equation.

Meanwhile, the degree of similarity calculated for the user information may be stored respectively and managed.

If the degree of similarity calculated is 100% or is such a degree that may be regarded as matching each other although they are not the same, the door lock may be converted to an unlocked state (S165). For example, in case the user information is a fingerprint information, the degree of similarity of 100% is impossible even if the user information is consistent with the authentication information. Therefore, an allowable range of the degree of similarity is defined and, when the degree of similarity calculated is within the allowable range, it may be regarded as matching each other or as succeeding in authentication.

Meanwhile, when the degree of similarity calculated is inconsistent with each other or is not within an allowable range (S160), the number of inconsistency is counted up and it is checked whether or not the number of inconsistency counted up reaches a decision number (S170).

If the number of inconsistency does not reach the decision number, the inputting unit 120 is maintained in an operable state to receive again the user information (S175) and a comparison authentication process may be repeated by utilizing a re-inputted user information (S140).

Meanwhile, when the number of inconsistency reaches the decision number, at least the inputting unit 120 may be converted to a forced block mode (S180).

When operating in the forced block mode, the degree of similarity calculated until now by a program added by the function extension module 150 (there may be five times of the degree of similarity until converted to the forced block mode due to a plurality of inconsistency decisions, starting from inputting a user information) is analyzed (S190).

For example, supposing that a user information is composed of a 10-digit letter; a decision number is five times, the respective degrees of similarity obtained from five times of an inputted user information are calculated as 10%, 70%, 90%, 80% and 80%, if the number of the cases in which the degree of similarity is 80% or more is greater than or equal to 3 times, then this may be regarded as an inaccurate manipulation of the inputting unit 120 due to a legal user' error.

In this way, if it is determined that a legal user manipulated inaccurately the inputting unit 120 by mistake (S200), the control unit 130 may reduce a predefined block time period set to maintain the forced block mode from a default time by a predetermined ratio (S210). For example, the pre-set three minutes may be reduced to one minute.

On the contrary, if the number of the cases in which the degree of similarity calculated five times are 80% or more is twice or less, this is regarded as a random manipulation of the inputting unit 120 by an illegal user and the forced block mode is thus maintained for the predefined block time period, i.e., 3 minutes (S220).

Then, if the block time period ends, the control unit may re-activate the operation of the inputting unit 120 and a user may again input the user information.

According to such a configuration manner, although a user information inconsistent with the authentication information is inputted, if the degree of similarity to the authentication information is discerned to be within a predetermined allowable range, a user currently inputting the user information is regarded as a legal user. Thus, it is possible to reduce the block time period for which the legal user has to wait uselessly and thus minimize inconvenience.

In particular, an extension function added in this way may be activated only when the function extension module 150 is mounted. In a further embodiment, when the function extension module 150 is removed from the module mounting unit 105, the control unit 130 may delete or suspend said extension function in execution.

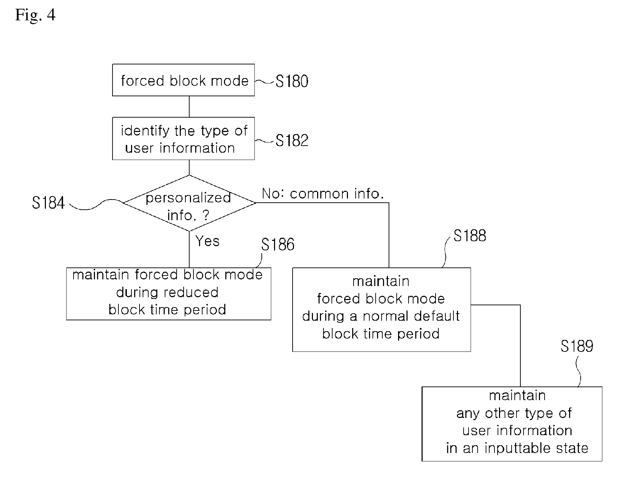

Next, an operation having a differentially applied forced block mode will be described with reference to Fig. 4. This operation includes differentiating a block time period depending on the type of a user information.

First, if it is determined that an inputted user information is inconsistent repeatedly more than a predetermined times after the function extension module 150 is mounted (see steps S110 to S170 in Fig. 3), the control unit 130 may convert the door lock 100 to the forced block mode (S180).

At this time, the control unit 130 identifies the type of the inputted user information (S182). The user information may be any one of a personal identification number inputted by manipulating a keypad, a digital information inputted by an electronic key or an IC card, etc., a fingerprint information obtained by scanning fingerprints of a user, and a face image information obtained by shooting the user's face.

Among them, with respect to the personal identification number, after registering one personal identification number into the door lock 100 (authentication information), this single registered personal identification number may be used in common by a plurality of users which use the door lock 100. In this way, the single information which may be used in common by a plurality of users is referred to as "common information".

Meanwhile, the fingerprint information or face information of a user is inherent to each user and thus may not be used by other users. Accordingly, the information which may be inherently assigned to each user in this way is referred to as "personalized information".

And, the control unit 130 may identify whether the inputted information of a user is the common information or personalized information (S184). If, during trying to authenticate by using the personalized information, the number of inconsistency reaches the decision number and the door lock is converted to the forced block mode, then the forced block mode is maintained only for the reduced block time period (S186). If, during trying to authenticate by using the common information, the door lock is converted to the forced block mode, then the forced block mode may be maintained for a normal default block time period (S188).

In a further embodiment, in a step (S186) of Fig. 4, it may also be contemplated that the block time period is reduced only when the degree of similarity of at least 80% occurs three times or more among five times of the personalized information inputted until now, while trying to authenticate by the personalized information.

In a further embodiment, although the door lock is converted to the forced block mode while trying to authenticate by using the common information (S188), any other type of user information may be configured to be maintained in an inputtable state (S189).

For example, if the door lock is converted to the forced block mode while trying to authenticate by using the common information such as the personal identification number, the operation of a keypad may be blocked (interrupted). However, even in this case, the try of authentication by using the personalized information such as an i-button, a fingerprint and irises is still allowed to do. Therefore, even if a user inputs an inaccurate personal identification number because he has forgotten for a moment the personal identification number and thus a keypad is blocked, the user may try to authenticate alternatively by utilizing his personalized information.

Here, in addition, in a state of being converted to the forced block mode because the number of the failure of the authentication according to any one of the user information reaches the decision number, when an authentication try according to the other type of user information is allowed, the decision number which is compared to the number of inconsistency may be set to be altered to less than the previous decision number.

The embodiments of the present invention as described above are simply illustrative of the technical concept of the present invention, and the protective scope of the invention should be interpreted by the following claims. In addition, it will be apparent to those skilled in the art that various substitutions, variations and changes may be made without departing from the spirit and scope of the invention as defined in the following claims, and all technical concept within the equivalent scope to the invention should be interpreted as being included within the protective scope of the invention.

## Claims

1. A digital door lock having a detachable function extension module comprising:
an inputting unit configured to receive a user information comprising at least one of a common information which can be used in common by a plurality of users and a personalized information which is inherent to each user;
a locking function unit configured to convert a door to a locked state or an unlocked state; and
a control unit configured to convert the door to an unlocked state by controlling the locking function unit when the user information inputted by the inputting unit and a pre-registered authentication information are consistent with each other by comparing the inputted user information to the authentication information; and, when the inputted user information is inconsistent with the authentication information, to compare again the re-inputted user information to the authentication information and then to convert the door to a forced block mode which blocks an inputting operation of the inputting unit when the number of inconsistency reaches a decision number;
wherein the digital door lock further comprises the function extension module mounted thereto; and a module mounting unit which supports data communication between the mounted function extension module and the control unit;
the function extension module comprises a program configured to implement a function of calculating the degree of similarity by comparing the inputted user information to the authentication information and a function of reducing a block time period in which the forced block mode is maintained if the degree of similarity of the re-inputted user information is greater than or equal to a predetermined standard value at the time of converting the door to the forced block mode; and
the control unit is configured to perform said functions by receiving the program from the function extension module mounted in the module mounting unit.

2. The digital door lock according to claim 1, wherein the common information is a personal identification number comprising a plurality of numbers or letters manually inputtable by a user via a keypad; and the personalized information comprises an information obtained from at least one of fingerprints, a face, irises, and blood vessel patterns of the user or an information, inherently assigned to each user, stored in a contact or non-contact type of data transmitting means.

3. The digital door lock according to claim 1, wherein the program is configured to reduce the block time period when the number of the user information having the degree of similarity of greater than or equal to the predetermined value is greater than or equal to a predetermined number.

4. The digital door lock according to claim 1, wherein the program is configured to reduce the block time period in which the forced block mode is maintained, in case the personalized information inputted by a user is consistent with the personalized information of an authorized user and the number of inconsistency reaches the decision number and thus the operation of the inputting unit is converted to the forced block mode.

5. The digital door lock according to claim 4, wherein the program is configured to calculate the degree of similarity by comparing the personalized information inputted by the user to the personalized information of the authorized user and to reduce the block time period in which the inputting unit is maintained in the forced block mode if the degree of similarity calculated is greater than or equal to the predetermined value.

6. The digital door lock according to claim 1, wherein the program is configured to forcedly block the inputting of the common information and to allow the inputting of the personalized information in case the number of inconsistency of the common information reaches the decision number.

7. The digital door lock according to claim 1, wherein the control unit is configured not to execute the program if the function extension module is removed from the module mounting unit.

8. A digital door lock having a detachable function extension module comprising:
an inputting unit configured to receive a user information comprising at least one of a common information which can be used in common by a plurality of users and a personalized information which is inherent to each user;
a locking function unit configured to convert a door lock to a locked state or an unlocked state; and
a control unit configured to convert the door to the unlocked state by controlling the locking function unit when the user information inputted by the inputting unit and a pre-registered authentication information are consistent with each other by comparing the inputted user information to the authentication information; and, when the inputted user information is inconsistent with the authentication information, to compare again the re-inputted user information to the authentication information and then to convert the door to a forced block mode which blocks an inputting operation of the inputting unit when the number of inconsistency reaches a decision number;
wherein the digital door lock further comprises a function extension module mounted thereto; a module mounting unit which supports data communication between the mounted function extension module and the control unit;
the function extension module comprises a program configured to implement a function of forcedly blocking the inputting of the common information and allowing the inputting of the personalized information in case the common information is inputted among the user information and the number of inconsistency of the common information reaches the decision number and thus the inputting unit is converted to the forced block mode; and
the control unit is configured to perform said function by receiving the program from the function extension module mounted in the module mounting unit.

9. A digital door lock having a detachable function extension module comprising:
an inputting unit configured to receive a user information comprising at least one of a common information which can be used in common by a plurality of users and a personalized information which is inherent to each user;
a locking function unit configured to convert a door to a locked state or an unlocked state; and
a control unit configured to convert the door to the unlocked state by controlling the locking function unit when the user information inputted by the inputting unit and a pre-registered authentication information are consistent with each other by comparing the inputted user information to the authentication information; and, when the inputted user information is inconsistent with the authentication information, to compare again the re-inputted user information to the authentication information and then to convert the door to a forced block mode which blocks an inputting operation of the inputting unit when the number of inconsistency reaches a decision number;
wherein the digital door lock further comprises a function extension module mounted thereto; and a module mounting unit which supports data communication between the mounted function extension module and the control unit;
the function extension module comprises a program configured to implement a function of differentiating a block time period in which the forced block mode is maintained by converting the inputting unit to the forced block mode since the number of inconsistency between the common information among the inputted user information and the authentication information reaches the decision number and a block time period in which the forced block mode is maintained by converting the inputting unit to the forced block mode according to the number of inconsistency of the personalized information; and
the control unit is configured to perform said function by receiving the program from the function extension module mounted in the module mounting unit.

## Amended claims

### Amended claims in accordance with Rule 137(2) EPC.

1. A digital door lock having a detachable function extension module, the digital door lock comprising:
an user-input unit configured to receive a user information inputted by a user comprising at least one of a common information which can be used in common by a plurality of users and a personalized information which is inherent to each user;
a locking function unit configured to convert a door to a locked state or an unlocked state; a control unit configured to convert the door to an unlocked state by controlling the locking function unit when the user information inputted by the user-input unit and a pre-registered authentication information are consistent with each other by comparing the inputted user information to the authentication information; and, when the inputted user information is inconsistent with the authentication information, to compare a newly inputted user information to the authentication information; and to convert the door to a forced block mode which blocks an inputting operation of the user-input unit then to maintain the forced block mode during a predetermined block time period when the number of times being inconsistent reaches a predetermined decision number of times; and a module mounting unit which supports to connect data communication between the mounted function extension module detachably mounted on the module mounting unit and the control unit;
the digital door lock is **characterized in that**
the function extension module stores a program configured to implement a first extension function of calculating the degree of similarity by comparing the inputted user information to the authentication information and a second extension function of reducing a block time period in which the forced block mode is maintained than the predetermined block time period if the degree of similarity of the newly inputted user information is greater than or equal to a predetermined standard value at the time of converting the door to the forced block mode; and
that the control unit is configured to execute said first and second extension functions by receiving the stored program from the function extension module when the function extension module is mounted in the module mounting unit, and not to execute said first and second extension functions by deleting the received program if the function extension module is detached from the module mounting unit.

2. The digital door lock according to claim 1, wherein the common information is a personal identification number comprising a plurality of numbers or letters manually inputtable by a user via a keypad; and the personalized information comprises an information obtained from at least one of fingerprints, a face, irises, and blood vessel patterns of the user or an information, inherently assigned to each user, stored in a contact or non-contact type of data transmitting means.

3. The digital door lock according to claim 1, wherein the second extension function of the program is configured to reduce the block time period than the predetermined block time period, when the number of the user information which has the degree of similarity of greater than or equal to the predetermined standard value is greater than or equal to a predetermined number.

4. The digital door lock according to claim 1, wherein the program is configured to differentiate the block time periods between a case the personalized information inputted by a user is inconsistent with the personalized information of an authorized user and the number of times of being inconsistent reaches the decision number of times, and a case the common information inputted by a user is inconsistent with a pre-registered common information, and the number of times of being inconsistent reaches the decision number of times.

5. The digital door lock according to claim 1, wherein the program is configured to further implement a third extension function forcedly blocking the inputting of the common information and allowing the inputting of the personalized information in case the number of times of being inconsistent of the common information reaches the decision number of times.
